# EUROPEAN PATENT APPLICATION

(11) **EP 4 654 042 A1**
(43) Date of publication of application: **26.11.2025**
(21) Application number: 25174876.0
(22) Date of filing: 07.05.2025
(51) Int. Cl.: G06F 16/535

(54) **MECHANISM TO REDUCE QUERY REJECT RATE**

(30) Priority: 20.05.2024 US 202418669449
(71) Applicant: Microsoft Technology Licensing, LLC, Redmond, WA 98052 (US)
(72) Inventor: LARA SILVA, JOSE ANTONIO, Redmond, 98052 (US); KREISEDER, PETER JOSEF, Redmond, 98052 (US); WAYMENT, ADAM TAYLOR, Redmond, 98052 (US); BEKMEZCI, FERDANE, Redmond, 98052 (US); JENKINS, SAMUEL JOSEI, Redmond, 98052 (US)
(74) Representative: CMS Cameron McKenna Nabarro Olswang LLP

(57) **Abstract**

The disclosed techniques improve search results by reducing the rate at which queries are rejected for potentially yielding offensive, grossly inaccurate, or otherwise inappropriate search results. This enables a broader set of useful search results to be returned to the user. In some configurations, the user-provided query is analyzed to identify terms that could yield an inappropriate search result. A query is constructed using the identified terms. The user-provided query and the constructed query are performed independently, yielding two sets of results. Results from the constructed query are removed from the user-provided query, allowing safer and more relevant results to be returned to the user.

## Description

### BACKGROUND

Operating system (OS) search allows a user to find files, folders, and other content on their computing device. Recent advances in machine learning technology have enabled additional types of search, such as searching through screenshots that are taken as the user interacts with their computer. This allows the user to find interactions with applications, exchanges that took place during a meeting, or other transient experiences.

However, like other types of search, these search results may inadvertently include offensive or otherwise inappropriate results. Some search results become objectionable when they are provided in response to particular search queries - the same results may be unobjectionable in isolation or in response to other queries. For example, hypothetically, if "purple person" evolved into derisive slang for a computer programmer, search results that included pictures of computer programmers would be deemed offensive in response to searches that include the word "purple." For example, a search query for "purple dress" seems innocuous. The user may be searching for a photo of their daughter wearing a purple dress. However, the search engine may see the word purple in conjunction with a word that relates to a person - such as a dress - and return images of people that the model associates with "purple". Unfortunately, due to the nature of machine learning models, this may include computer programmers.

One conventional technique for addressing this concern is a block list. The block list detects risky terms or expressions that have been shown to yield results that are discriminatory or otherwise offensive. Continuing the example, the block list may include "purple, person", and limit or prohibit queries that include these or related terms. However, blocking queries with these terms may be overly restrictive, preventing queries or query results that would have actually been inoffensive and useful to the user.

It is with respect to these and other considerations that the disclosure made herein is presented.

### SUMMARY

The disclosed techniques improve search results by reducing the rate at which queries are overclassified for potentially yielding offensive, grossly inaccurate, or otherwise inappropriate search results. This enables a broader set of useful search results to be returned to the user, without reducing protection from genuinely offensive, inaccurate, or otherwise inappropriate search results. In some configurations, the user-provided query is analyzed to identify terms that could yield an inappropriate search result. A query is constructed using the identified terms. The user-provided query and the constructed query are performed independently, yielding two sets of results. Results from the constructed query are removed from the user-provided query, allowing safer and more relevant results to be returned to the user.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 illustrates capturing a screenshot of a computing device.
FIG. 2 illustrates indexing a screenshot in a semantic search index.
FIG. 3 illustrates using a semantic index to respond to a user history query.
FIG. 4 illustrates preventing execution of a user history query that contains a phrase found in a block list.
FIG. 5 illustrates removing potentially offensive search results from a query that includes a phrase found in a block list.
FIG. 6 illustrates removing embeddings that overlap with embeddings generated from a phrase on a block list.
FIG. 7 is a flow diagram of an example method for a mechanism to reduce query reject rate.
FIG. 8 is a computer architecture diagram illustrating an illustrative computer hardware and software architecture for a computing system capable of implementing aspects of the techniques and technologies presented herein.

### DETAILED DESCRIPTION

OS search is improved by enabling new types of content to be indexed and retrieved. Traditional OS search indexes file contents. However, much of what is displayed by a computing device is not stored in a file on disk. For example, web forms are filled out and submitted to web sites directly without leaving a trace on disk. Similarly, in-game interactions may be generated dynamically, and as such are not available for retrieval from disk. Even content that is backed by a file, such as a document that is open in a word processor, may change significantly before it is saved to disk. Accordingly, a significant amount of user-generated content is lost to traditional OS search techniques. To address this deficiency, screenshots of one or more computer desktop displays are captured and indexed, allowing new types of content to be searched, including transient content that is never stored in a file.

Screenshots are captured intermittently to increase the amount and type of content available for future retrieval. Screenshots may be captured at key points in time, such as in response to a window being made visible, when a document has been opened, or in response to user input. Screenshots may also be captured periodically, reducing the chance that a particular piece of content will be missed.

Screenshots may be pre-processed before being indexed. For example, machine learning models or other techniques may be used to identify regions of interest of the screenshot. These regions may be used to focus indexing and retrieval on the most relevant portions of the screenshot. Examples of regions of interest include an active window, text blocks, images, video, etc. Content typically excluded from regions of interest includes desktop background, OS generated content such as a system bar, and other content that is not particular to the user or otherwise unlikely to be the target of a user history query. Indexing regions of interest within screenshots improves the granularity at which user history queries operate, allowing for a more nuanced understanding of a screenshot's content.

Screenshots, or region(s) thereof, may be indexed using embedding vectors. Embedding vectors - referred to herein as embeddings - are multidimensional arrays of numbers that represent content in an embedding space. Embeddings may be created from a screenshot or other image in a number of ways. For example, the image may be divided into fixed-size patches, analogous to breaking a paragraph down into words. These patches may then be converted into a single dimension vector that is transformed into the embedding space by a trainable linear projection.

Proximity in the embedding space indicates similarity - two embedding vectors that are relatively close are more likely to be related, at least in some dimensions, than embedding vectors that are further apart. In some configurations, a pair of embedding vectors that have a smaller dot product are considered closer than a pair of embedding vectors that have a larger dot product. Other measures of distance in the embedding space, such as cosine similarity, are similarly contemplated.

In some configurations, embedding vectors are generated using machine learning models. The generated embeddings may be stored, e.g., in a vector database, for later retrieval. The number of dimensions of the embedding space used for image search may range from a small number, such as 20 dimensions, to thousands or more dimensions. Increased model complexity and embedding dimensionality may increase the quality of search results, but at the expense of storage, memory, and computing resources. In some configurations, the number of parameters used by a model and the number of dimensions of the embeddings computed by the model are restricted to meet performance and resource constraints of executing on a local computing device.

Using embeddings extracted from screenshots to search for content enables access to more and different types of content, as well as increased flexibility when accessing traditional search targets. For example, a user may recall a physical feature about someone they had a meeting with. A query such as "meeting yesterday where a man was wearing glasses" may be processed to find a calendar appointment, meeting recording, meeting chat, or other associated content for a meeting in which there was a video stream of a man wearing glasses.

Once results of the user history query are displayed, a user may select a search result to view a full context, including the full screenshot, metadata associated with the screenshot, date and time information, etc. The search result may also be selected to restore the application to the state it was in when the screenshot was captured. For example, a document that contained the content that was indexed may be opened. In the case of a web page, a web browser may be opened and navigated to the web page that the user was viewing at the time.

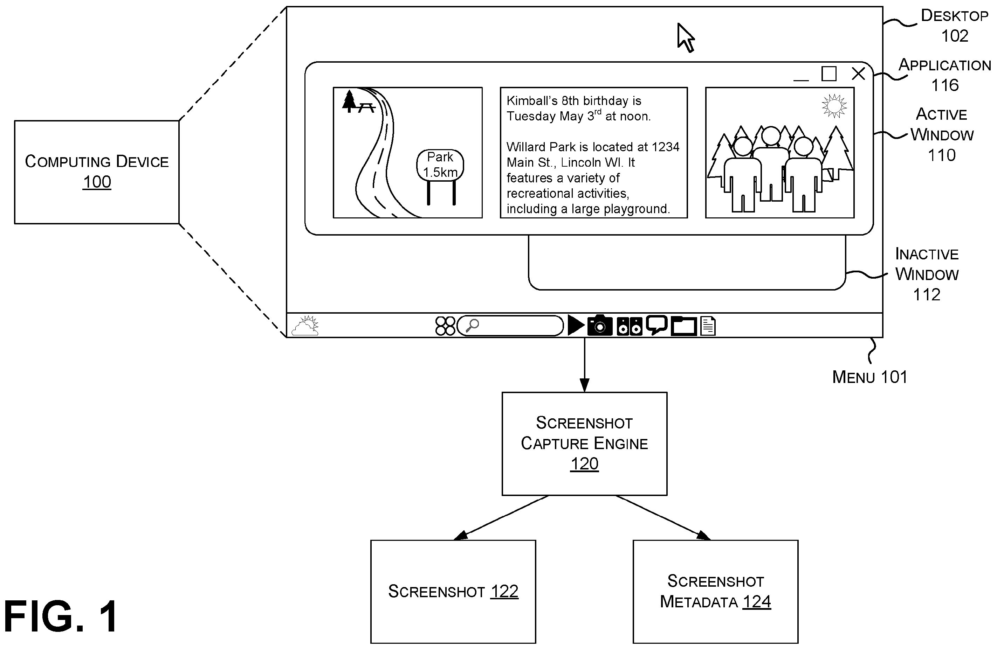

FIG. 1 illustrates capturing a screenshot of a computing device. Computing device 100 displays desktop 102 on one or more display screens. Computing device 100 may be a personal computer, a tablet, smartphone, wearable device, or any other computing device with a graphical display. Desktop 102 refers to graphics content spanning one or more displays in which applications may display content.

Application 116, for example, displays a birthday invitation. Active window 110 of application 116 is an example of a window that is receiving user input. Inactive window 112 is an example of a window that is not receiving user input, and which may be partially occluded. In some configurations, whether a window is active or not is one factor when selecting regions of a screenshot for indexing. For example, active window 110 may be a region of a screenshot used for indexing, while inactive window 112 may not.

Screenshot capture engine 120 may intermittently capture screenshots 122 and accompanying screenshot metadata 124. In some configurations, screenshot 122 is an image of desktop 102, while in other configurations screenshot 122 is an image of one or more individual applications displayed on desktop 102. Screenshot metadata 124 may include an indication of applications that were running when the screenshot was captured, including the locations and dimensions of application windows, title bar text, the names of documents that are opened by particular applications or that are currently displayed by particular applications, and the like. Screenshot metadata 124 may be used to filter a user history query. Screenshot metadata 124 may also be used to reconstitute application 116 when a screenshot of application 116 is selected in a list of search results of a user history query.

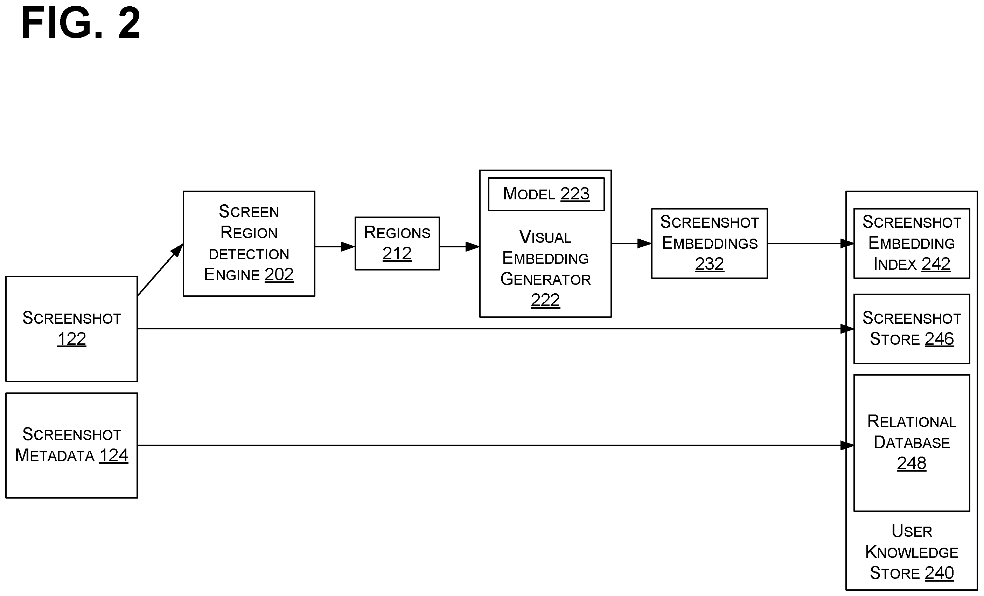

FIG. 2 illustrates indexing a screenshot in a semantic search index. Screenshot 122 is processed by screen region detection engine 202 to identify regions 212. Regions 212 may be portions of screenshot 122 deemed more likely to be relevant. For example, active window 110 may be deemed more relevant to the user of computing device 100 than inactive window 112, and so screen region detection engine 202 may identify active window 110 as one of regions 212. Screen region detection engine 202 may also identify regions of text, pictures, diagrams, and other forms of content within regions 212. Each of regions 212 may include a reference to screenshot 122, a size and/or location within screenshot 122, a content type, and/or properties that are specific to the content type of the region. For example, a region that contains an image may include the dimensions of the image, while a region that contains an application window may include the name of the window. As discussed briefly above, regions 212 are identified in order to more precisely tailor user history queries to particular pieces of content.

Visual embedding generator 222 includes model 223 - a machine learning model configured to receive regions of screenshot 122 and generate corresponding screenshot embeddings 232. Model 223 may be an embedding model or a feature extractor model. Model 223 may use a convolutional neural network architecture or a transformer-based architecture. Screenshot embeddings 232 are stored in screenshot embedding index 242, which may be a vector database or similar data structure that maps a screenshot embedding 232 to a corresponding screenshot 122 and/or region 212 of screenshot 122.

Screenshot 122 may itself be stored directly in screenshot store 246 of user knowledge store 240. Screenshot 122 may be used to generate results to user history queries, enabling a user to visualize the state of their computing device at a time when screenshot 122 was taken. Screenshot metadata 124 that corresponds to screenshot 122 or one of regions 212 of screenshot 122 may similarly be stored in the record in relational database 248.

Other types of content may also be indexed and used to perform a semantic search. For example, documents such as word processing documents, spreadsheet documents, images, etc., may be used with a machine learning model to generate one or more embeddings that represent the document in the embedding space.

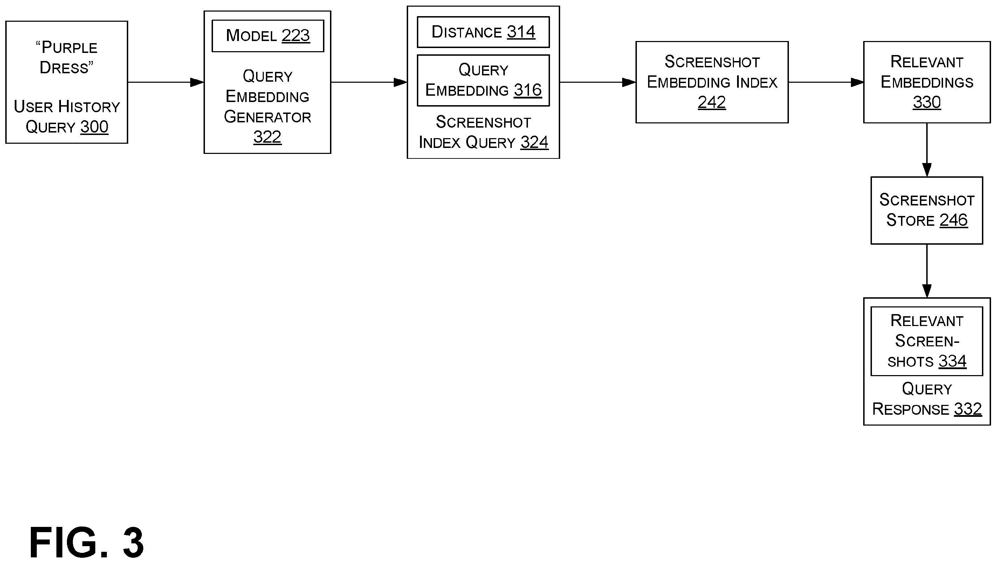

FIG. 3 illustrates using a semantic index to respond to a user history query. User history query 300 may target a previous interaction a user had with a computing device or a piece of content previously displayed by the computing device. User history query 300 may be a text query, such as "hotel search results for my upcoming trip" or an image-based query, such as an image of an upcoming beach vacation. In some configurations, user history query 300 may be narrowed to a particular application, such as content captured from a web browser.

User history query 300 may also be a web search query, file system query, or any other type of query. In these other contexts, instead of finding relevant screenshots from a user knowledge base, relevant websites, files, or the like are identified. User history query 300 may also be used to identify documents or other content that has been indexed with an embedding vector.

Query embedding generator 322 receives user history query 300. Query embedding generator 322 generates query embedding 316 that represents user history query 300. An embedding refers to a multidimensional array that represents an entity in an embedding space. For example, query embedding generator 322 may use model 223 to infer query embedding 316 from user history query 300. Model 223 may be any machine learning model that encodes data with embedding vectors, such as an embedding model or a feature extractor model, and which uses a convolutional neural network architecture or a transformer-based architecture. Additionally, or alternatively, query embedding generator 322 may use a different model that encodes screenshots and query embeddings in the same or similar embedding space as model 223.

In some configurations, query embedding 316 is provided by query embedding generator 322 as part of screenshot index query 324. Screenshot index query 324 may also include distance 314 - a distance within the embedding space. Screenshot index query 324 is provided to screenshot embedding index 242 to extract relevant embeddings 330. Relevant embeddings 330 are embeddings stored in screenshot embedding index 242 that are within distance 314 of query embedding 316. This distance may be computed as a Euclidian distance, a cosine similarity, or a dot product, for example, but other distance algorithms are similarly contemplated.

Embeddings of screenshots within distance 314 of query embedding 316 are expected to be relevant to user history query 300. For example, screenshot embeddings within distance 314 of an embedding derived from the query "purple dress" may correspond to screenshots of a meeting in which a participant was wearing a purple dress, a garment design of a purple dress, a website discussing a purple dress worn by a celebrity, etc.

In some configurations, relevant embeddings 330 are provided to screenshot store 246 to obtain relevant screenshots 334. Relevant screenshots 334 are the screenshots that were used to generate relevant embeddings 330. This enables a user to see the state of their computing device at a point in time that is relevant to user history query 300. Relevant screenshots 334 may be included in query response 332, which responds to user history query 300.

In some configurations, user history query 300 may target documents on the computing device. A document may be searched for in a manner similar to searching for a screenshot - generating an embedding for query 300 and comparing it to a collection of embeddings of previously indexed documents.

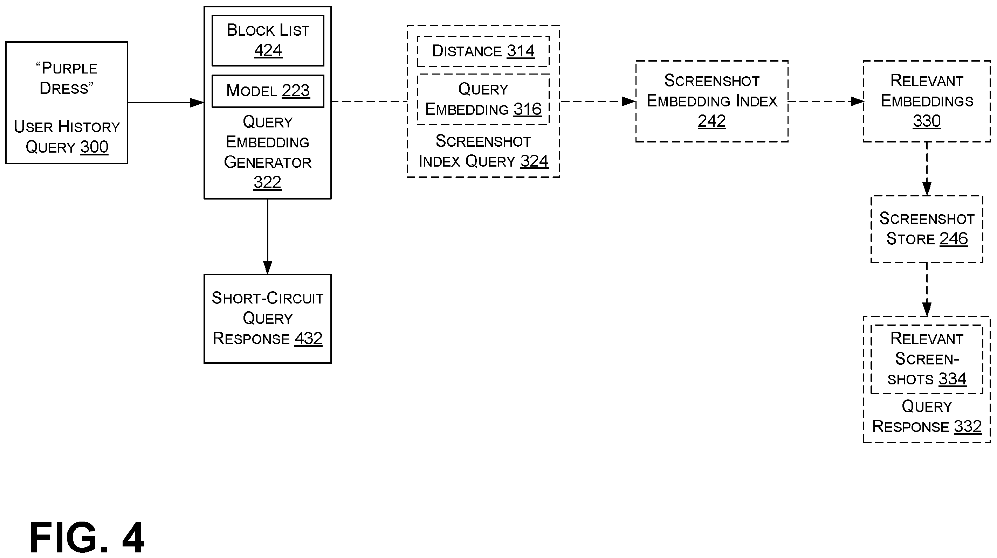

FIG. 4 illustrates preventing execution of a user history query that contains a phrase found in a block list. Block list 424 may be constructed manually or through the use of automation, or imported from a known list of offensive phrases. User history query 300 is one example of a suspicious query.

Query embedding generator 322 looks up some or all of the words of user history query 300 in block list 424. Query embedding generator 322 may look for an exact match of some or all terms of user history query 300. Additionally, or alternatively, query embedding generator 322 may use fuzzy matching, machine learning model based matching, or other techniques for associating user history query 300 with an entry on block list 424.

When query embedding generator 322 determines that user history query 300 may result in a query result that is offensive or otherwise inappropriate it generates short-circuit query response 432. Short-circuit query response 432 indicates to the user that user history query 300 was not executed due to a concern that the search results could be offensive or otherwise inappropriate.

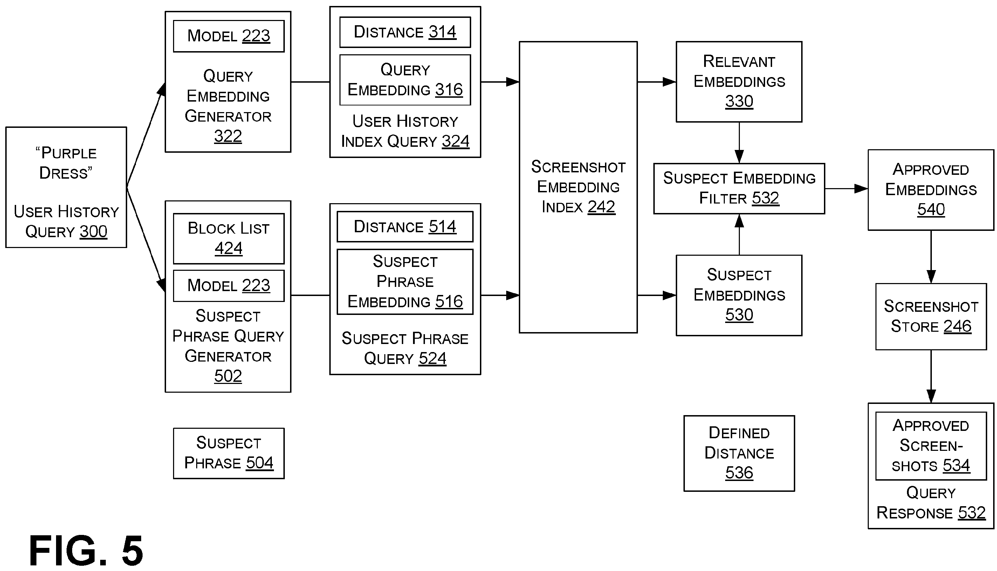

FIG. 5 illustrates removing potentially offensive search results from a query that includes a phrase found in a block list. In some configurations, user history query 300 is used to generate a set of relevant embeddings 330. Independently, user history query 300 is analyzed for suspect phrases that could lead to offensive or otherwise inappropriate search results. These suspect phrases are used as the basis for one or more search queries, which when executed yield suspect embeddings 530. Any embeddings that are found in both relevant embeddings 330 and suspect embeddings 530 are removed from relevant embeddings 330. What remains after removing suspect embeddings 530 from relevant embeddings 330 are approved embeddings 540.

As illustrated, and as discussed above in conjunction with FIG. 3, user history query 300 is provided to query embedding generator 322. Query embedding generator 322 may use machine learning model 223 or another technique to generate query embedding 316 for user history query 300. As discussed above in conjunction with FIG. 3, distance 314 may be adjusted to limit or expand the number of matches within screenshot embedding index 242. Applying user history index query 324 to screenshot embedding index 242 yields relevant embeddings 330.

Suspect phrase query generator 502 also receives user history query 300. Suspect phrase query generator 502 generates suspect phrase query 524, which is provided to screenshot embedding index 242 to identify suspect embeddings 530. Suspect phrase query 524 may include distance 514. Similar to distance 314, distance 514 indicates how far an embedding within screenshot embedding index 242 can be from suspect phrase embedding 516 and still be considered suspect.

Suspect embedding filter 532 removes suspect embeddings 530 from relevant embeddings 330. In some configurations, embeddings from suspect embeddings 530 are removed from relevant embeddings 330 when there is an exact match. Additionally, or alternatively, any embedding of relevant embeddings 330 may be filtered out when any embedding of suspect embeddings 530 is within defined distance 536. In this way, adjustments to defined distance 536 may be made to control how close a relevant embedding 330 must be to a suspect embedding 530 before it is filtered out.

Approved embeddings 540 may be used to generate query response 532. Query response 532 may include approved screenshots 534 obtained with approved embeddings 540 from screenshot store 246.

FIG. 5 illustrates querying a screenshot-based index. However, other types of content may similarly be indexed and searched. For example, a text or image-based search of documents stored on a computing device may return relevant documents. This functionality may extend existing file search techniques. However, it would be inappropriate for a query including "purple" to semantically match with a document that discussed computer programmers. Filtering out potentially offensive search results by subtracting results that appear in an offensive query, as discussed in FIG. 5, mitigates this risk.

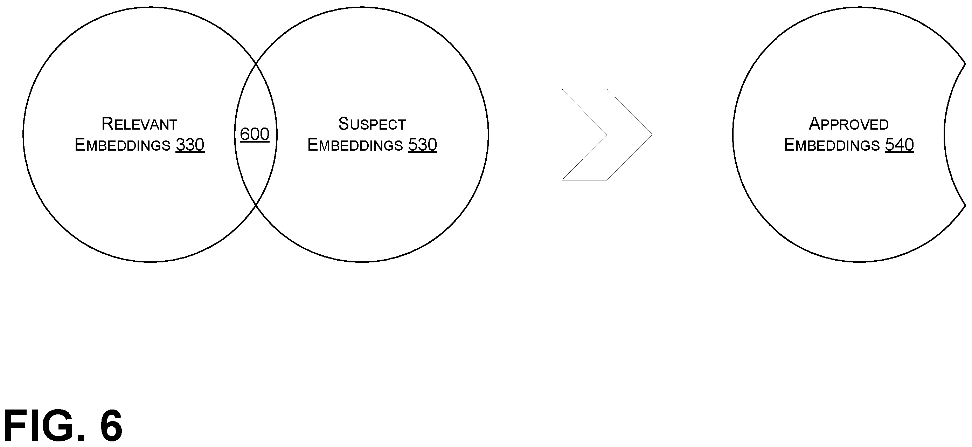

FIG. 6 illustrates removing relevant embeddings that overlap with embeddings generated from a phrase on a block list. FIG. 6 shows overlap 600 between relevant embeddings 330 and suspect embeddings 530. Removing overlap 600 from relevant embeddings 330 yields approved embeddings 540.

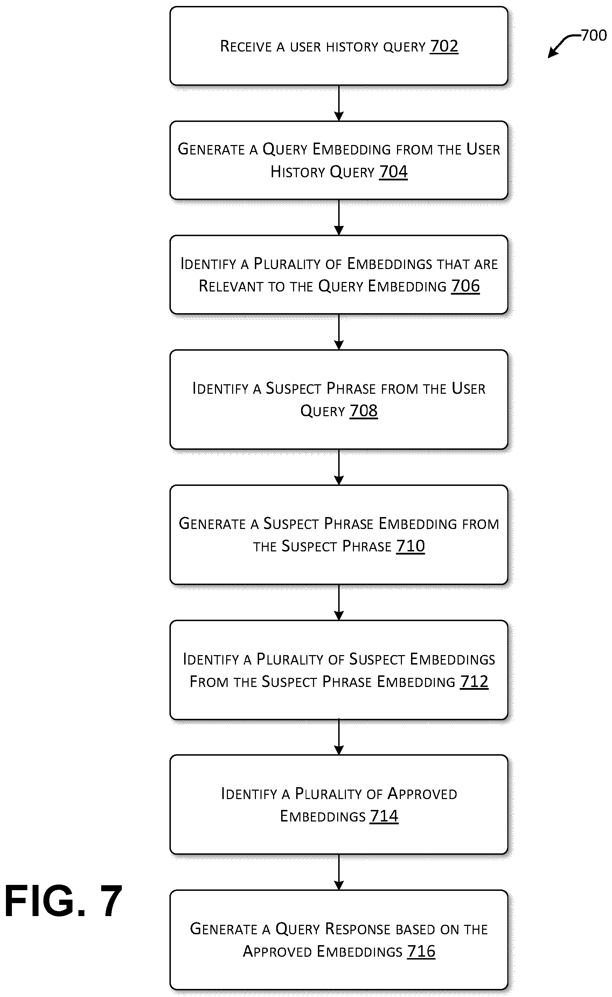

FIG. 7 is a flow diagram of an example method for a mechanism to reduce query reject rate. Routine 700 begins at operation 702, where user history query 300 is received.

Routine 700 continues at operation 704, where query embedding 316 is generated from use history query 300. For example, machine learning model 223 may be prompted with user history query 300 to produce query embedding 316.

Routine 700 continues at operation 706, where a plurality of relevant embeddings 330 are identified based on query embedding 316. Relevant embeddings 330 may be identified for being related to query embedding 316 in the embedding space of machine learning model 223. For example, embeddings stored in screenshot embedding index 242 and which are within a defined distance 314 from query embedding 316 may be selected.

Routine 700 continues at operation 708, where suspect phrase 504 is identified within user history query 300. For example, phrases found in block list 424 may be identified within user history query 300. Additionally, or alternatively, an association may be identified between a phrase found in block list 424 and some or all of user history query 300. For example, a large language model may be queried to identify any entries in block list 424 that are implicated by user history query 300.

Routine 700 continues at operation 710, where suspect phrase embedding 530 is generated from suspect phrase 504. For example, suspect phrase query generator 502 generates suspect phrase query 524, which includes suspect phrase embedding 516. Suspect phrase embedding 516 may be generated with the same machine learning model 223 that was used to generated query embedding 316. Suspect phrase query 524 may also include distance 514, which determines which screenshot embeddings will be included in suspect embeddings 530.

Routine 700 continues at operation 712, where executing suspect phrase query 524 with screenshot embedding index 242 identifies suspect embeddings 530. In the context of a user history query, suspect embeddings 530 are embeddings that were generated from screenshots, and which represent search results that may be offensive or otherwise inappropriate.

Routine 700 continues at operation 714, where a plurality of approved embeddings 540 are identified by removing any of suspect embeddings from relevant embeddings 330. The result is a plurality of embeddings that are relevant to user history query 300 and which are also not likely to be viewed as inappropriate.

Routine 700 continues at operation 716, where a query response 532 is generated based on the approved embeddings 540. For example, approved embeddings 540 may be used to obtain corresponding approved screenshots 534 from screenshot store 246. Other context of the computing device when these screenshots were taken may also be used to generate query response 532.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entireties. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the routine 700 are described herein as being implemented, at least in part, by modules running the features disclosed herein can be a dynamically linked library (DLL), a statically linked library, functionality produced by an application programing interface (API), a compiled program, an interpreted program, a script or any other executable set of instructions. Data can be stored in a data structure in one or more memory components. Data can be retrieved from the data structure by addressing links or references to the data structure.

Although the following illustration refers to the components of the figures, it should be appreciated that the operations of the routines 700 may be also implemented in many other ways. For example, the routine 700 may be implemented, at least in part, by a processor of another remote computer or a local circuit. In addition, one or more of the operations of the routine 700 may alternatively or additionally be implemented, at least in part, by a chipset working alone or in conjunction with other software modules. In the example described below, one or more modules of a computing system can receive and/or process the data disclosed herein. Any service, circuit or application suitable for providing the techniques disclosed herein can be used in operations described herein.

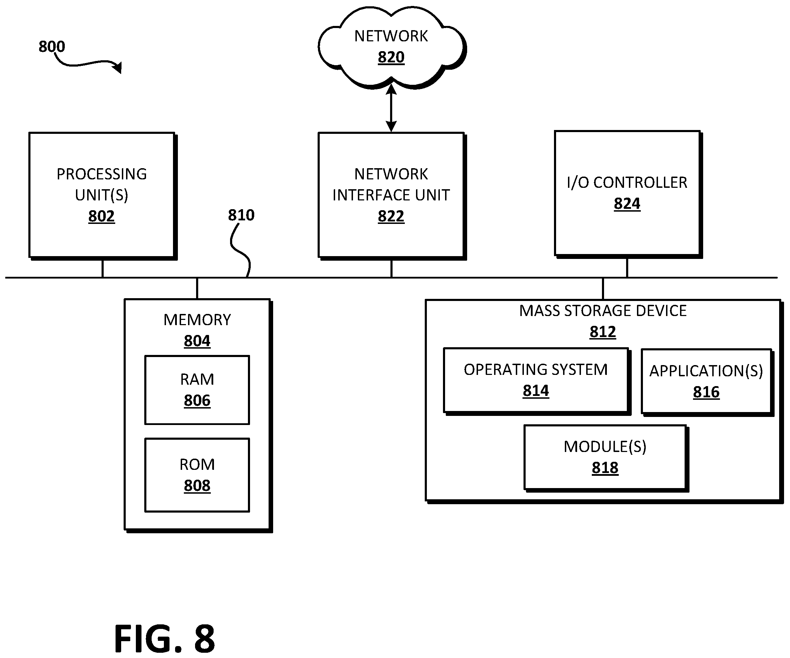

FIG. 8 shows additional details of an example computer architecture 800 for a device, such as a computer or a server configured as part of the systems described herein, capable of executing computer instructions (e.g., a module or a program component described herein). The computer architecture 800 illustrated in FIG. 8 includes processing unit(s) 802, a system memory 804, including a random-access memory 806 ("RAM") and a read-only memory ("ROM") 808, and a system bus 810 that couples the memory 804 to the processing unit(s) 802.

Processing unit(s), such as processing unit(s) 802, can represent, for example, a CPU-type processing unit, a GPU-type processing unit, a neural processing unit, a field-programmable gate array (FPGA), another class of digital signal processor (DSP), or other hardware logic components that may, in some instances, be driven by a CPU. For example, and without limitation, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), Neural Processing Unites (NPUs) etc.

A basic input/output system containing the basic routines that help to transfer information between elements within the computer architecture 800, such as during startup, is stored in the ROM 808. The computer architecture 800 further includes a mass storage device 812 for storing an operating system 814, application(s) 816, modules 818, and other data described herein.

The mass storage device 812 is connected to processing unit(s) 802 through a mass storage controller connected to the bus 810. The mass storage device 812 and its associated computer-readable media provide non-volatile storage for the computer architecture 800. Although the description of computer-readable media contained herein refers to a mass storage device, it should be appreciated by those skilled in the art that computer-readable media can be any available computer-readable storage media or communication media that can be accessed by the computer architecture 800.

Computer-readable media can include computer-readable storage media and/or communication media. Computer-readable storage media can include one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including but not limited to random access memory (RAM), static random-access memory (SRAM), dynamic random-access memory (DRAM), phase change memory (PCM), read-only memory (ROM), erasable programmable read-only memory (EPROM), electrically erasable programmable read-only memory (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 800 may operate in a networked environment using logical connections to remote computers through the network 820. The computer architecture 800 may connect to the network 820 through a network interface unit 822 connected to the bus 810. The computer architecture 800 also may include an input/output controller 824 for receiving and processing input from a number of other devices, including a keyboard, mouse, touch, or electronic stylus or pen. Similarly, the input/output controller 824 may provide output to a display screen, a printer, or other type of output device.

It should be appreciated that the software components described herein may, when loaded into the processing unit(s) 802 and executed, transform the processing unit(s) 802 and the overall computer architecture 800 from a general-purpose computing system into a special-purpose computing system customized to facilitate the functionality presented herein. The processing unit(s) 802 may be constructed from any number of transistors or other discrete circuit elements, which may individually or collectively assume any number of states. More specifically, the processing unit(s) 802 may operate as a finite-state machine, in response to executable instructions contained within the software modules disclosed herein. These computer-executable instructions may transform the processing unit(s) 802 by specifying how the processing unit(s) 802 transition between states, thereby transforming the transistors or other discrete hardware elements constituting the processing unit(s) 802.

The present disclosure is supplemented by the following example clauses:
Example 1: A method comprising: receiving a user history query; generating a query embedding from the user history query; identifying a plurality of relevant embeddings associated with the query embedding; identifying a suspect phrase associated with the user history query; generating a suspect phrase embedding from the suspect phrase; identifying a plurality of suspect embeddings associated with the suspect phrase embedding; identifying a plurality of approved embeddings comprising embeddings of the plurality of relevant embeddings that are not included in the plurality of suspect embeddings; and generating a query response based on the plurality of approved embeddings.
Example 2: The method of Example 1, wherein the plurality of relevant embeddings comprises embeddings within a defined distance of the query embedding.
Example 3: The method of Example 1, wherein the plurality of relevant embeddings is selected from a plurality of embeddings of screenshots or regions of screenshots of a computing device.
Example 4: The method of Example 1, wherein the suspect phrase is identified by a text comparison of the user history query to a list of suspect phrases.
Example 5: The method of Example 4, wherein the text comparison comprises a string comparison of the user history query to the list of suspect phrases.
Example 6: The method of Example 3, wherein the query embedding is generated with a machine learning model and wherein the plurality of embeddings of screenshots or regions of screenshots of the computing device are generated with the machine learning model.
Example 7: The method of Example 6, wherein the suspect phrase embedding is generated with the machine learning model from the suspect phrase.
Example 8: A system comprising: a processing unit; and a computer-readable storage medium having computer-executable instructions stored thereupon, which, when executed by the processing unit, cause the processing unit to: receive a search query; generate a query embedding from the search query; identify a plurality of relevant embeddings associated with the query embedding; identify a suspect phrase associated with the search query; generate a suspect phrase embedding from the suspect phrase; identify a plurality of suspect embeddings associated with the suspect phrase embedding; identify a plurality of approved embeddings comprising embeddings of the plurality of relevant embeddings that are greater than a defined distance from at least one of the plurality of suspect embeddings; and generate a query response based on the plurality of approved embeddings.
Example 9: The system of Example 8, wherein the plurality of approved embeddings comprises embeddings of the plurality of relevant embeddings that are not included in the plurality of suspect embeddings.
Example 10: The system of Example 8, wherein a machine learning model is used to select the suspect phrase from a list of suspect phrases based on the search query.
Example 11: The system of Example 8, wherein identifying the relevant embeddings comprises identifying embeddings of a plurality of search result embeddings that are within a defined distance of the query embedding.
Example 12: The system of Example 11, wherein the plurality of search result embeddings comprises embeddings of screenshots of a computing device.
Example 13: The system of Example 8, wherein the plurality of relevant embeddings is selected from a plurality of embeddings of screenshots or regions of screenshots of a computing device.
Example 14: The system of Example 13, wherein the query embedding is generated with a machine learning model and wherein the plurality of embeddings of screenshots or regions of screenshots of the computing device are generated with the machine learning model.
Example 15: A computer-readable storage medium having encoded thereon computer-readable instructions that when executed by a processing unit causes a system to: receive a user history query; infer, with a machine learning model, a query embedding from the user history query; identify a plurality of relevant embeddings associated with the query embedding from a plurality of embeddings of screenshots of a computing device; identify a suspect phrase associated with the user history query; infer, with the machine learning model, a suspect phrase embedding from the suspect phrase; identify a plurality of suspect embeddings associated with the suspect phrase embedding from the plurality of embeddings of screenshots of a computing device; identify a plurality of approved embeddings comprising embeddings of the plurality of relevant embeddings that are not included in the plurality of suspect embeddings; and generate a query response that includes content associated with at least one of the plurality of approved embeddings.
Example 16: The computer-readable storage medium of Example 15, wherein the suspect phrase is identified by a text comparison of the user history query to a list of suspect phrases.
Example 17: The computer-readable storage medium of Example 15, wherein the plurality of approved embeddings comprises embeddings of the plurality of relevant embeddings that are not within a defined distance of any of the plurality of suspect embeddings.
Example 18: The computer-readable storage medium of Example 15, wherein the user history query comprises a text-based description of an interaction with the computing device.
Example 19: The computer-readable storage medium of Example 15, wherein the user history query comprises an image that depicts an interaction with the computing device.
Example 20: The computer-readable storage medium of Example 15, wherein the plurality of relevant embeddings comprises embeddings within a defined distance of the query embedding and wherein the plurality of relevant embeddings is selected from a plurality of embeddings of screenshots or regions of screenshots of a computing device.

The disclosed techniques improve search results by reducing the rate at which queries are rejected for potentially yielding offensive, grossly inaccurate, or otherwise inappropriate search results. This enables a broader set of useful search results to be returned to the user. In some configurations, the user-provided query is analyzed to identify terms that could yield an inappropriate search result. A query is constructed using the identified terms. The user-provided query and the constructed query are performed independently, yielding two sets of results. Results from the constructed query are removed from the user-provided query, allowing safer and more relevant results to be returned to the user.

While certain example embodiments have been described, these embodiments have been presented by way of example only and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the inventions disclosed herein. The accompanying claims and their equivalents are intended to cover such forms or modifications as would fall within the scope of the inventions disclosed herein.

It should be appreciated that any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method comprising:
receiving a user history query (300);
generating a query embedding (316) from the user history query (300);
identifying a plurality of relevant embeddings (330) associated with the query embedding (316);
identifying a suspect phrase (504) associated with the user history query (300);
generating a suspect phrase embedding (516) from the suspect phrase (504);
identifying a plurality of suspect embeddings (530) associated with the suspect phrase embedding (516);
identifying a plurality of approved embeddings (540) comprising embeddings of the plurality of relevant embeddings (330) that are not included in the plurality of suspect embeddings (530); and
generating a query response (532) based on the plurality of approved embeddings (540).

2. The method of claim 1, wherein the plurality of relevant embeddings comprises embeddings within a defined distance of the query embedding.

3. The method of claim 1, wherein the plurality of relevant embeddings is selected from a plurality of embeddings of screenshots or regions of screenshots of a computing device.

4. The method of claim 1, wherein the suspect phrase is identified by a text comparison of the user history query to a list of suspect phrases.

5. The method of claim 4, wherein the text comparison comprises a string comparison of the user history query to the list of suspect phrases.

6. The method of claim 3, wherein the query embedding is generated with a machine learning model and wherein the plurality of embeddings of screenshots or regions of screenshots of the computing device are generated with the machine learning model.

7. The method of claim 6, wherein the suspect phrase embedding is generated with the machine learning model from the suspect phrase.

8. A system comprising:
a processing unit; and
a computer-readable storage medium having computer-executable instructions stored thereupon, which, when executed by the processing unit, cause the processing unit to:
receive a search query (300);
generate a query embedding (316) from the search query (300);
identify a plurality of relevant embeddings (330) associated with the query embedding (316);
identify a suspect phrase (504) associated with the search query (300);
generate a suspect phrase embedding (516) from the suspect phrase (504);
identify a plurality of suspect embeddings (530) associated with the suspect phrase embedding (516);
identify a plurality of approved embeddings (540) comprising embeddings of the plurality of relevant embeddings (330) that are greater than a defined distance (536) from at least one of the plurality of suspect embeddings (530); and
generate a query response (532) based on the plurality of approved embeddings (540).

9. The system of claim 8, wherein the plurality of approved embeddings comprises embeddings of the plurality of relevant embeddings that are not included in the plurality of suspect embeddings.

10. The system of claim 8, wherein a machine learning model is used to select the suspect phrase from a list of suspect phrases based on the search query.

11. The system of claim 8, wherein identifying the relevant embeddings comprises identifying embeddings of a plurality of search result embeddings that are within a defined distance of the query embedding.

12. The system of claim 11, wherein the plurality of search result embeddings comprises embeddings of screenshots of a computing device.

13. A computer-readable storage medium having encoded thereon computer-readable instructions that when executed by a processing unit causes a system to:
receive a user history query (300);
infer, with a machine learning model (223), a query embedding (316) from the user history query (300);
identify a plurality of relevant embeddings (330) associated with the query embedding (316) from a plurality of embeddings of screenshots of a computing device (242);
identify a suspect phrase (504) associated with the user history query (300);
infer, with the machine learning model (223), a suspect phrase embedding (516) from the suspect phrase (504);
identify a plurality of suspect embeddings (530) associated with the suspect phrase embedding (516) from the plurality of embeddings of screenshots of a computing device (242);
identify a plurality of approved embeddings (540) comprising embeddings of the plurality of relevant embeddings (330) that are not included in the plurality of suspect embeddings (530); and
generate a query response (532) that includes content associated with at least one of the plurality of approved embeddings (540).

14. The computer-readable storage medium of claim 13, wherein the user history query comprises a text-based description of an interaction with the computing device.

15. The computer-readable storage medium of claim 13, wherein the user history query comprises an image that depicts an interaction with the computing device.
